# EUROPEAN PATENT APPLICATION

(11) **EP 2 165 972 A2**
(43) Date of publication of application: **24.03.2010**
(21) Application number: 09169156.8
(22) Date of filing: 01.09.2009
(51) Int. Cl.: C01B 3/38, C01B 3/40

(54) **Process for the production of hydrogen gas employing a thermally stable catalyst**

(30) Priority: 17.09.2008 US 211981
(71) Applicant: AIR PRODUCTS AND CHEMICALS, INC., Allentown, PA 18195-1501 (US); Catacel Corp., Garrettsville, OH 44231 (US)
(72) Inventor: Wilhelm, Frederick Carl, Zionsville, PA 18092 (US); Broekhuis, Robert R., Allentown, PA 18104 (US); Garg, Diwakar, Emmaus, PA 18049 (US); Chattopadhyay, Sudipta, Streetsboro, OH 44241 (US); Retallick, William B., West Chester, PA 19382 (US)
(74) Representative: Gervasi, Gemma

(57) **Abstract**

The present invention provides a process for producing a gaseous product comprising hydrogen, said process comprising: contacting a feed gas mixture comprising steam and a gas comprising from 1 to 5 carbon atoms with a catalyst structure under reaction conditions sufficient to produce the product gas comprising hydrogen, wherein the catalyst structure comprises: a metal substrate comprising a metal; at least one layer of a catalyst support material coated onto the metal substrate, wherein the catalyst support material comprises: θ-alumina, zirconia, and at least one rare earth metal oxide; and at least one catalytically active component, wherein the at least one catalytically active component is incorporated either into or onto the catalyst support material.

## Description

### BACKGROUND OF THE INVENTION

This invention relates to the production of a product gas comprising hydrogen in a process employing a catalyst that exhibits phase stability at high temperatures and pressures in the presence of steam.

Hydrogen gas is currently used in the synthesis of many different industrial chemicals, hydrocraking of petroleum feedstock, and hydrodesulphurization of petroleum products such as diesel and gasoline and it is expected that additional production of hydrogen will be required for developing applications such as, for example, fuel cells in transportation and distributed power generation markets. The demand for hydrogen for such applications is expected to grow substantially over the next 10 to 20 years.

A well-known method for producing hydrogen is steam methane reforming. Hydrocarbons such as methane are reformed with steam at high temperature (from about 500°C to about 1100°C) and high pressure (from 2 atm to about 40 atm) over a catalyst in a steam methane reformer to produce a mixture containing hydrogen and carbon monoxide, which is commonly referred to as "synthesis gas" or "syngas". In a shift reactor, carbon monoxide and steam are reacted to produce a hydrogen-rich gas containing hydrogen and carbon dioxide. The hydrogen-rich gas can be purified by pressure swing adsorption to recover pure hydrogen. As can be appreciated, the foregoing processes are conducted in large-scale installations that are capable of producing more than 3 billion standard cubic liters of hydrogen per day.

Conventional hydrocarbon steam reforming processes typically comprise a reforming furnace containing a plurality of reformer tubes. Each of these reformer tubes serves as a reactor. In traditional reformers, each tube contains a packed bed of catalyst in the form of pellets or extrudates. These pellets or extrudates are made of a porous ceramic support such as alumina, calcium aluminate, magnesium aluminate, etc. A metal catalyst such as nickel is then impregnated on these porous ceramic pellets or extrudates. These pellets or extrudates in normal operation crush and break apart due to thermal cycling, causing build-up of pressure with time and requiring premature replacement.

One way to solve the problems related to crushing and breaking of pellets or extrudates is to use metal catalyst supported on monoliths This new catalyst for hydrocarbon steam reforming is typically a composite catalyst comprising a monolithic support upon which at least one porous inorganic material referred to herein as a "washcoat" is formed which supports the catalytically active components. Desired properties of a washcoat include chemical, physical, and mechanical stability along with good adhesion to the substrate and sufficient surface area and porosity onto which catalytically active compounds, such as, for example, metals or their oxides, sulfides, and carbides, can be deposited.

Monolithic supports suitable for high-temperature operation include ceramics and metals. For flexibility of manufacture, optimization of pressure drop, and integrity of structure under repeated heating and cooling, it is often preferred to employ a metal foil, sheet, or plate as the monolithic support. Examples include metal honeycombs, and cross-flow or axial-flow structures prepared from corrugated and/or flat metallic foils.

Employment of metallic monolithic supports presents challenges with respect to adhesion of the washcoat onto the metallic surface - a measure of the degree of difficulty with which the washcoat can be separated from the metallic monolithic support. Catalysts for steam hydrocarbon reforming are expected to remain in service over a lifespan of several years; hence, a strongly adherent catalytic layer (catalytic layer comprises of a washcoat impregnated with a metal catalyst) is required to prevent loss of the catalytic layer during installation and operation, at conditions of high thermal and mechanical stress. Quantitative and qualitative standardized methods exist to measure adhesion of a coated layer. Even without employing such a method, the relative adhesion of different coated layers can be assessed through observation of the degree to which material from the coated layer is lost from the surface during simple mechanical handling, including scraping, bending, folding, and cutting.

Typical components of the washcoat include inorganic materials such as, for example, α-alumina, γ-alumina, magnesium aluminate, or calcium aluminate. For example, in U.S. Patent No. 6,921,738, Hwang et al. describe suitable washcoats such as, for example, refractory oxides such as alumina, silica, titania, silica-alumina, aluminosilicates, aluminum-zirconium oxide, preferably used in their high surface area forms. Hwang et al. teach that γ-alumina is preferred over α-alumina. Hwang et al. also state that it is known in the art to stabilize alumina supports against thermal degradation by the use of materials such as zirconia, titania, alkaline earth metal oxides, or rare earth metal oxides (such as ceria, lanthana, and rare earth oxide mixtures). However, Hwang et al., do not describe high-temperature stability of the washcoat under high partial pressure of steam.

As stated above, washcoat formulations typically exhibit poor adhesion properties on metallic supports; this is also true for washcoats that comprise γ-alumina. In this regard, the prior art describes numerous attempts to improve the adhesion. For example, Valentini et al. (Catal. Today 2001, vol 69, p. 307-314) describe the use of a boehmite primer coat; Zhao et al. (Surface and Coatings Technol. 2003, vol 167, p. 97-105) describe a three-step method comprising pre-oxidation of the metal and primer deposition. Meille (Appl. Cat. A 2006, vol. 315, p. 1-17) provides a review of various methods used to deposit catalysts on structured surfaces (both ceramic and metallic). In U.S. Patent No. 6,540,843, Liu et al. describe a method to apply a metal oxide coating to a metal support that does not require thermal pretreatment of the metal surface. The coating slurry described includes a fully dissolved metal oxide, hydroxide, nitrate, or alkoxide as a binder, and a particulate refractory metal oxide. Despite such attempts, a washcoat has yet to be provided that is free from adhesion problems throughout the desired life of the composite catalyst.

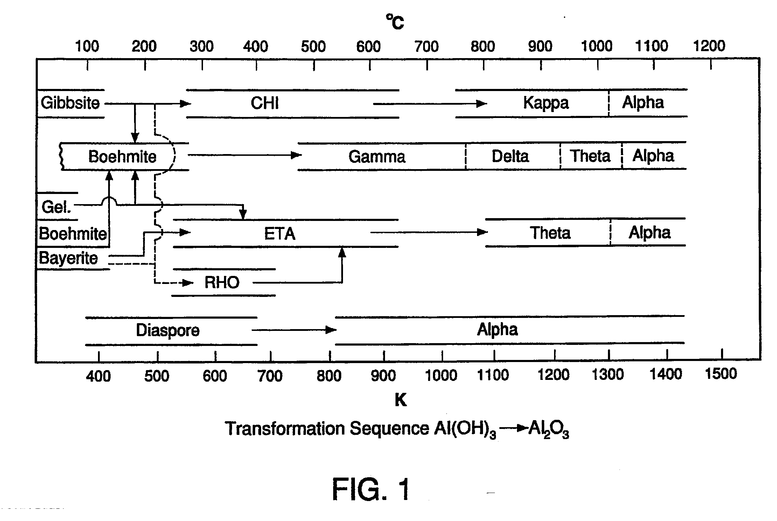

In addition to the above-described adhesion problems, even greater challenges exist in maintaining phase stability of the washcoat compositions. In this regard, it is difficult to achieve a proper balance between mechanical properties of the washcoat and surface area under reforming conditions. For example, although some washcoat components may provide excellent phase stability at reforming conditions, they provide a surface area for catalysis that is too low to achieve the desired volumetric activity relative to catalysts prepared on high-surface-area catalyst support materials. High-surface-area catalyst support materials known in the art, however, typically cannot withstand the hydrocarbon steam reforming conditions. For example, Figure 1 shows the phase transitions of alumina as a function of temperature at ambient pressure and in the absence of steam. This figure shows that γ-alumina transforms into δ-alumina at a temperature of about 750°C, to θ-alumina at about 950°C and finally to α-alumina at temperatures above 1050°C. It is clear from Figure 1 that under pre-reforming of natural gas temperatures (up to 650°C) γ-alumina should be stable; however, in a pre-reformer the γ-alumina material is exposed to steam (75 vol. %) at a high pressure (400 psi) and has been noted to undergo phase transformation to δ-alumina, θ-alumina, and eventually to α-alumina. Thus, the presence of steam has an influence on the phase change to α-alumina.

The problem with the transformation of γ-alumina to other alumina phases is that γ-alumina possesses very high surface area (often as high as 200 m²/g), but alpha-alumina possesses much lower surface area (usually no greater than 5 m²/g). Intermediate phases of alumina posses intermediate surface areas. For example, θ alumina possesses 20-60 m²/g surface area. Thus, when a washcoat undergoes phase transformation under the process conditions described above, the resulting reconfiguration typically leads to greatly decreased surface area, loss of access to catalytically active components and, ultimately, loss of catalytic activity.

Some of these challenges have been addressed in the prior art, particularly the art directed to environmental catalysts. Such catalysts, effecting combustion and destruction of environmentally harmful compounds in exhaust gases, operate at near-atmospheric pressures, at high temperature (up to 1000°C) in environments that contain 20 to 25% water of combustion (0.2 to 0.25 atm partial pressure of steam). As a result, gamma-alumina must be stabilized in catalyst formulations for these applications.

In comparison with the conditions encountered by environmental catalysts, hydrocarbon steam reforming processes are operated at much higher pressures (commonly up to 600 psig) and steam vapor fractions (ranging from 20-80%) with partial pressure of steam varying from 0.6 to 24 atm. At such conditions, high surface area washcoats developed for environmental applications are not sufficiently phase stable and gradually transform to α-alumina. The transformation is accelerated by the presence of high partial pressures of steam. Hence, the stabilization measures applied to catalyst formulations designed for environmental applications are insufficient to provide such stabilization to hydrocarbon reforming catalysts.

Therefore, there is a need in the art for a hydrogen production process that employs a washcoat on a monolithic metallic substrate that maintains sufficiently high surface area and phase stability at conditions of hydrocarbon steam reforming. In addition, such formulations should demonstrate and maintain good adhesion between the washcoat and the metal substrate.

### BRIEF SUMMARY OF THE INVENTION

The present invention provides a process for producing a gaseous product comprising hydrogen, said process comprising: contacting a feed gas mixture comprising steam and a gas comprising from 1 to 5 carbon atoms with a catalyst structure under reaction conditions sufficient to produce the product gas comprising hydrogen, wherein the catalyst structure comprises: a metal substrate comprising a metal; at least one layer of a catalyst support material coated onto the metal substrate, wherein the catalyst support material comprises: θ-alumina, zirconia, and at least one rare earth metal oxide; and at least one catalytically active component, wherein the at least one catalytically active component is incorporated either into or onto the catalyst support material.

In another aspect, the process of the present invention provides a process for preparing a catalyst structure comprising the steps of: preparing a first aqueous slurry comprising water, an acid, a thermally stabilized alumina comprising θ-alumina, at least one catalytically active component, and zirconia, wherein the zirconia and the thermally stabilized alumina comprising θ-alumina are present in the slurry at a molar ratio of from 0.05 to 5.0 zirconia to alumina; contacting a metal substrate with the first aqueous slurry to form a coated metal substrate; and calcining the coated metal substrate at a temperature of from 500°C to 1100°C to form the catalyst structure.

In yet another aspect, the present invention provides a process for preparing a catalyst structure comprising the steps of: preparing a first aqueous slurry comprising water, an acid, a thermally stabilized alumina comprising θ-alumina, and zirconia, wherein the zirconia and the thermally stabilized alumina comprising θ-alumina are present in the slurry at a molar ratio of from 0.05 to 5.0 zirconia to alumina; forming a layer of a catalyst support material on a metal substrate by contacting the metal substrate with the first aqueous slurry and calcining the coated metal substrate at a temperature of from 500°C to 1100°C to form a calcined coated metal substrate; contacting the calcined coated metal substrate with a solution comprising the at least one catalytically active component to incorporate the at least one catalytically active component either into or onto the catalyst support material to form a catalyst precursor; and calcining the catalyst precursor at a temperature of from 300°C to 1100°C to form the catalyst structure.

### BRIEF DESCRIPTION OF SEVERAL VIEWS OF THE DRAWINGS

Figure 1 illustrates phase changes of aluminas versus temperature;

Figure 2 is a sectional view of a reactor according to the invention;

Figure 3A is a catalyst according to the present invention in the form of a corrugated foil; and

Figure 3B is a top side view of the catalyst of Figure 3A.

### DETAILED DESCRIPTION OF THE INVENTION

The present invention is directed to a process for producing a gaseous product comprising hydrogen, said process comprising: contacting a feed gas mixture comprising steam and a gas comprising from 1 to 5 carbon atoms with a catalyst structure under reaction conditions sufficient to produce the product gas comprising hydrogen, wherein the catalyst structure comprises: a metal substrate comprising a metal; at least one layer of a catalyst support material coated onto the metal substrate, wherein the catalyst support material comprises: θ-alumina, zirconia, and at least one rare earth metal oxide; and at least one catalytically active component, wherein the at least one catalytically active component is incorporated either into or onto the catalyst support material. The catalyst employed has sufficiently high surface area for the reaction to occur efficiently, and exhibits exceptional phase stability and structural integrity under hydrocarbon steam reforming conditions.

The catalyst structure employed in the process of the present invention comprises a metal substrate which functions as a carrier for the catalyst support material and may also function to aid in heat transfer during the reaction. The metal substrate may be in any shaped form and may have planar or non-planar surfaces. In preferred embodiments, the metal substrate is selected from the group consisting of: a foil, a sheet, a plate, a shaped form having a plurality of machined or etched microchannels, a duct, a tube, and mixtures thereof. In more preferred embodiments, the metal substrate is in the shape of a corrugated foil, which improves gas mixing by creating more localized turbulent flow and also improves the gas diffusion rate.

The thickness of the metal substrate is any thickness that exhibits the desirable mechanical properties and chemical resistance under the conditions (e.g., temperature, pressure) of the process of the present invention. The thickness of the metal substrate is preferably at least about 0.002 inch to about 0.020 inch. Preferred metal substrates are at least about 0.003 inch to about 0.010 inch in thickness with a most preferred metal substrate being from about 0.004 inch to about 0.006 inch in thickness.

Preferred metals of which the metal substrates are comprised include stainless steels, high-nickel alloys, and aluminum-containing alloys. Such alloys may contain small or trace amounts of one or more other metals such as molybdenum, copper, silicon, niobium, titanium, yttrium, and the like. A particularly preferred metal substrate is a steel composition comprising iron, aluminum, and chromium such as, for example, FeCrAlloy™_{.}

The metal substrate is preferably cleaned before the catalyst support material is applied. Cleaning may be accomplished by any means known in the art of chemical, mechanical, or thermal treatment, or combination thereof, which serves to remove impurities from the metallic surface.

The catalyst structure employed in the process of the present invention further comprises a catalyst support material (also referred to herein as a "washcoat") coated onto the metal substrate. The catalyst support material provides desired mechanical and physical properties such as, for example, adhesion to the metal substrate, a porous surface to accommodate catalytically active components, and stability against degradation at process conditions. The catalyst support material further functions to support a metal catalyst and provide a metal catalyst surface on which the catalyzed hydrogen-producing reaction occurs.

The catalyst support material of the present invention comprises thermally stabilized alumina comprising θ-alumina. As used herein, the term "thermally stabilized alumina" refers to a temperature-stabilized form of alumina that is obtained by subjecting boehmite, γ-alumina, or similar hydrated or activated alumina precursors to an elevated temperature (typically about 1000°C), thereby converting substantially all of the hydrated or activated precursors to more temperature-stable forms of alumina such as, for example, θ-alumina. Preferably, thermally stabilized alumina comprises greater than about 50% θ-alumina, and more preferably greater than about 75% θ-alumina. The remainder of the thermally stabilized alumina may comprise other forms of alumina such as, for example, α-, γ-, η, and κ-alumina. Such thermally stabilized aluminas are conveniently commercially available from, for example, Sasol Limited in Houston TX; Rhodia, Inc. in Cranbury, NJ; or Alcoa Inc. in Pittsburgh PA in a powder form, which can be mixed and/or milled with water and common binder ingredients such as acid and/or bohemite alumina. Bohemite alumina is also available from the above suppliers.

Preferably, the thermally stabilized alumina comprising θ-alumina comprises from about 75 to about 99 weight percent of the washcoat (dried), more preferably from about 80 to about 97 weight percent of the washcoat, and most preferably from about 85 to about 95 weight percent of the washcoat.

The thermally stabilized alumina comprising θ-alumina employed in the present invention preferably has a particle size in the washcoat of from 1 µm to 25 µm, more preferably from 2 µm to 15 µm, and most preferably from 3 µm to 10 µm.

Particle size is typically measured by a laser diffraction method. This is the method used in common particle size instruments known to those of ordinary skill in the art and supplied by, for example, Malvern Instruments Ltd. In Malvern Worcestershire UK or Beckman Coulter Inc in Fullerton CA, for example.

The catalyst support material also comprises zirconia (zirconium oxide). Preferably, the particle size of the zirconia employed in the catalyst structure of the present invention is in the range of from about .001 µm to .200 µm in at least one dimension. More preferably, the zirconia has a particle size of from about 0.005 µm to about 0.15 µm. Still more preferably, the zirconia has a particle size of from about 0.005 µm to about 0.10 µm. Most preferably, the zirconia has a particle size of from about 0.005 µm to about 0.05 µm.

The zirconia component of the support material preferably comprises from about 3 to about 40 weight percent of the support material (dried) and, more preferably, from about 6 to about 30 weight percent of the support material.

Preferably, the molar ratio of zirconia to thermally stabilized alumina in the at least one layer of catalyst support material is in the range from about 0.05 to about 5.0, and more preferably in the range of about 0.1 to about 0.5.

Preferably, the catalyst support material also comprises at least one rare earth metal oxide, which functions to stabilize at least the alumina from undergoing thermally induced phase transformation. The term "rare earth metal oxide" refers to an oxide of any of the rare earth metals of Group IIIB of the Periodic Table of Elements, including the Lanthanides (e.g., lanthanum, cerium, praseodymium, neodymium, samarium, europium, gadolinium, terbium, dysprosium, holmium, erbium, thulium, ytterbium, lutetium, and mixtures thereof).

Preferably, the rare earth metal oxide component of the washcoat comprises from about 0.1 to about 10 weight percent of the alumina component of the washcoat (dried), and more preferably from about 0.5 to about 6 weight percent of the alumina component of the washcoat.

Optionally, the catalyst support materials additionally comprise a small amount of hydrated alumina such as boehmite, gibbsite, bayerite, nordstrandite, and diaspore. The hydrated alumina may also be stabilized by the presence of the rare earth metal oxides. If present, the hydrated alumina component of the washcoat comprises from about 1 to about 30 weight percent of the washcoat (dried), more preferably from about 2 to about 20 weight percent of the washcoat, and most preferably from about 6 to about 12 weight percent of the washcoat.

The catalyst structure employed in the process of the present invention further comprises at least one catalytically active component that is incorporated into or onto the catalyst support material. As used herein, the phrase "catalytically active" refers to the ability of a particular metal to catalyze the desired chemical reaction in the production of a gaseous product comprising hydrogen. A "catalytically active component" according to the present invention may include base metals and precious metals and their salts, oxides, sulfides, and carbides. As such, in some embodiments of the present invention, the metal oxide or metal salt is present either on the surface of or in the catalytic support material and the metal oxide or metal salt is chemically reduced to the base metal *in situ* by the presence of hydrogen in the reactor. Thus, the "catalytically active component" may also refer to the precursor forms of the catalytically active metal. As used herein, the term "precursor forms" refers to forms of the catalytically active component that, although not in an active form with respect to its ability function as a catalyst in a hydrogen producing reaction, will be able to do so upon, for example, the action of a reductive process. Preferably, the catalytically active component in the reduced form is at least one selected from the group consisting of: nickel, cobalt, rhodium, platinum, ruthenium, palladium, iridium, and mixtures thereof. Nickel, rhodium, or a mixture of nickel and rhodium are particularly preferred.

The total amount of the catalytically active component in the catalyst structure of this invention is chosen to provide a desired catalytically-promoting effect during the use of the catalyst structure. Such amounts may depend on the choice of metal and the intended use of the catalyst structure. Precious metals are generally applied in concentrations from about 0.1 to about 5 weight percent of the washcoat (dried), more preferably from about 0.25 to about 2 weight percent of the washcoat. Base metals are generally applied in concentrations from about 3 to about 50 weight percent of the washcoat (dried), and more preferably from about 5 to about 25 weight percent of the washcoat. The amounts of this catalytically active component are stated on a reduced metal basis regardless of the form in which the metal is present in the catalyst structure, and are based on the total, dry weight of the catalytic layer. As explained in more detail below, the incorporation of the catalytically active component can be accomplished by, for example, impregnating the formed catalyst support material, or its unformed, finely divided components, with an aqueous solution of the catalytically active components.

The catalyst structure employed in the present invention is generally made by preparing a flowable first aqueous slurry comprising the components of the catalyst support material and, in some embodiments, the catalytically active component. The catalytically active component may be incorporated into the at least one layer of catalyst support material by contacting a liquid containing a soluble or dispersed form of the catalytically active component with a dispersion comprising the thermally stabilized alumina and zirconia. The pH of the slurry is preferably below about 5, and acidity may be supplied by the use of a minor amount of a water-soluble organic or inorganic acid such as, for example, hydrochloric or nitric acid, or a lower fatty acid such as acetic acid. Nitric acid is most preferred.

In preferred embodiments of the present invention, the zirconia component of the aqueous slurry is introduced into the slurry as an aqueous suspension of zirconia and, thus, the zirconia in the suspension is the source of the zirconia in the slurry regardless of whether the zirconia changes in form or size once incorporated into the slurry. Such suspension may also be referred to herein as a "colloidal suspension" or "colloidal zirconia". In such embodiments, the aqueous suspension of zirconia is first prepared by suspending zirconia particles in an aqueous medium. Preferably, the aqueous suspension of zirconia comprises from about 3 to about 30 weight percent of zirconia particles, more preferably the aqueous suspension of zirconia comprises from about 5 to about 20 weight percent of zirconia particles. Preferably, the particle size of the suspended zirconia is from about 0.005 µm to about 0.05 µm such that, when suspended in the aqueous medium, the resultant suspension is translucent.

The aqueous suspension of zirconia can be purchased from a commercial supplier, powdered zirconia can be purchased by a commercial supplier followed by suspension in an aqueous medium via high shear agitation, or the suspension can be prepared *in situ* by methods known to those skilled in the art such as, for example, adding a base such as, for example, ammonia water, ammonia gas, sodium hydroxide, or potassium hydroxide to an aqueous solution of a zirconium salt such as, for example, zirconyl nitrate, zirconyl chloride, or zirconyl nitrate to precipitate the hydrous zirconium, followed by treatment with acid. In such preferred embodiments wherein the aqueous suspension of zirconia is first prepared, the aqueous suspension of zirconia can be added to the slurry comprising the other components of the aqueous slurry comprising the components of the washcoat (and, in some embodiments, the catalytically active component) or the washcoat components can be added to the aqueous suspension of zirconia.

To be readily flowable or sprayable, the aqueous slurry comprising the components of the catalyst support material (i.e., the washcoat) preferably comprises from about 20 to about 50 weight percent of total solids, more preferably from about 25 to about 40 weight percent of total solids and, most preferably from about 33 to about 38 weight percent of total solids. In the slurry, the molar ratio of the zirconia to the thermally stabilized alumina is preferably in the range of from about 0.05 to about 5, and preferably in the range of from about 0.1 to about 0.5. Any method known in the art may be employed to contact the metal substrate with the aqueous slurry and coat the aqueous slurry onto the metallic surface, including painting, brushing, spraying, dipping, and flow-coating.

At some point after the step of contacting the metal substrate with aqueous slurry, the coated metal substrate is calcined (i.e., heated in the presence of oxygen such as, for example, air) at a temperature sufficiently high to dry the catalyst support material and to provide the desired form of the catalytically active component. Calcination temperatures typically range from about 300°C to about 1100°C. The duration of the calcination step is typically from about 1 minute to about 2.0 hours.

More specifically, in embodiments of the present invention wherein the catalytically active component is incorporated into the catalyst support material, the catalyst is typically prepared by a process comprising the steps of: preparing a first aqueous slurry comprising water, an acid, a thermally stabilized alumina comprising θ-alumina, at least one catalytically active component, and zirconia, wherein the zirconia and the thermally stabilized alumina comprising θ-alumina are present in the slurry at a molar ratio of from 0.05 to 5.0 zirconia to alumina; contacting a metal substrate with the first aqueous slurry to form a coated metal substrate; and calcining the coated metal substrate at a temperature of from 500°C to 1100°C to form the catalyst structure.

The thickness of the coated layer may be chosen according to the needs of the catalytic application, and conveniently ranges from about 5 µm to about 100 µm, and preferably from about 10 µm to about 50 µm. In such embodiments, the thickness can be controlled by, for example, contacting the metal substrate having at least one washcoat layer with a second aqueous slurry to add at least one additional layer of the second aqueous slurry onto the catalyst, wherein the second aqueous slurry comprises water, an acid, a thermally stabilized alumina comprising θ-alumina, at least one catalytically active component, and zirconia, wherein the zirconia and the thermally stabilized alumina comprising θ-alumina are present in the slurry at a molar ratio of from 0.05 to 5.0 zirconia to alumina; and calcining the coated metal substrate at a temperature of from about 500°C to about 1100°C. The first and second aqueous slurries can be the same aqueous slurry and, in preferred embodiments of the present invention, they are the same aqueous slurry.

In embodiments wherein the catalytically active component is incorporated onto the catalyst support material by deposition after calcination of the catalyst support material, the catalyst is typically prepared by a process comprising the steps of: preparing a first aqueous slurry comprising water, an acid, a thermally stabilized alumina comprising θ-alumina, and zirconia, wherein the zirconia and the thermally stabilized alumina comprising θ-alumina are present in the slurry at a molar ratio of from 0.05 to 5.0 zirconia to alumina; forming a layer of a catalyst support material on a metal substrate by contacting the metal substrate with the first aqueous slurry and calcining the coated metal substrate at a temperature of from 500°C to 1100°C to form a calcined coated metal substrate; contacting the calcined coated metal substrate with a solution comprising the at least one catalytically active component to incorporate the at least one catalytically active component onto the catalyst support material to form a catalyst precursor; and calcining the catalyst precursor at a temperature of from 300°C to 1100°C to form the catalyst structure.

In such embodiments, the thickness of the coated layer may be increased by repeating at least once the steps of: contacting the catalyst structure with a second aqueous slurry to add at least one additional layer of the second aqueous slurry onto the catalyst structure, wherein the second aqueous slurry comprises water, an acid, a thermally stabilized alumina comprising θ-alumina, and zirconia, wherein the zirconia and the thermally stabilized alumina comprising θ-alumina are present in the slurry at a molar ratio of from 0.05 to 5.0 zirconia to alumina and calcining the coated metal substrate at a temperature of from 500°C to 1100°C to form a layered calcined coated metal substrate; contacting the layered calcined coated metal substrate with a solution comprising the at least one catalytically active component to incorporate the at least one catalytically active component either into or onto the catalyst support material to form a layered catalyst precursor; and calcining the layered catalyst precursor at a temperature of from 300°C to 1100°C.

In other embodiments, the thickness of the coated layer may be increased by repeating at least once the steps of: contacting the catalyst with a second aqueous slurry comprising water, an acid, a thermally stabilized alumina comprising θ-alumina, and zirconia to add at least one additional layer of the composition onto the coated metal substrate, wherein the molar ratio of the zirconia to the thermally stabilized alumina comprising θ-alumina is from about 0.05 to about 5.0; and calcining the coated metal substrate at a temperature of from about 500°C to about 1100°C to form a layered calcined coated metal substrate. The second aqueous slurry may be the first aqueous slurry. Once the desired thickness has been achieved, the layered calcined coated metal substrate may then be contacted with a solution comprising the at least one catalytically active component to incorporate the at least one catalytically active component either into or onto the catalyst support material to form a layered catalyst precursor. The layered catalyst precursor is then preferably calcined again at a temperature of from about 300°C to about 1100°C to form the catalyst structure. Catalyst deposition may be followed by calcination and/or reduction operations to convert the deposited components to their catalytically active forms. The ratio of the weights of catalytically active components to the weight of catalyst support materials within the catalytic layer is selected according to the desired catalyst activity; and is typically between about 0.001 and about 0.5, preferably between about 0.005 and about 0.3.

Regardless of whether or not the catalytically active component is present in the aqueous slurry comprising the components of the catalyst support material, optionally one or more pore-forming or templating agents may be included in the aqueous slurry. Pore-forming and templating agents are organic materials that arrange themselves, randomly or with some degree of structure, in the coated layer. Such agents function to create additional pores by decomposing during the calcination step thereby leaving behind a random or organized pore structure. Examples include cellulose and its derivatives, as well as other natural and synthetic oligomeric or polymeric materials. If employed, they are preferably present in amounts that range from about 1 to about 10 weight percent of the solid matter in the aqueous slurry.

The process of the present invention also comprises the step of reacting a feed gas mixture comprising steam and a hydrocarbon-containing gas in the presence of the catalyst under reaction conditions sufficient to produce the product gas comprising hydrogen. As used herein, the phrase "under reaction conditions sufficient to produce the product gas" as it relates to a product gas comprising hydrogen generally refers to the temperature and pressure which optimizes the conversion of the hydrocarbon-containing gas into the product gas comprising hydrogen gas in the presence of steam. In this regard, the temperature is preferably from about 500°C to about 900°C and the pressure is preferably from about 1 atmosphere to about 50 atmospheres.

In one embodiment of the present invention, the reaction is the methane steam reforming reaction CH₄ + H₂O → CO + 3H₂ wherein a methane and steam feed gas mixture is reacted in the presence of an active metallic catalyst on a metallic support at elevated temperatures to form a product gas comprising carbon monoxide and hydrogen. Other sources of hydrocarbons that may be used in the process according to the invention include natural gas (predominantly methane but also containing heavier hydrocarbons such as, for example, ethane, propane and butane), propane, petroleum gas, naphtha, and combinations thereof. The feed gas may also contain between about 0.5% to about 15% hydrogen by volume.

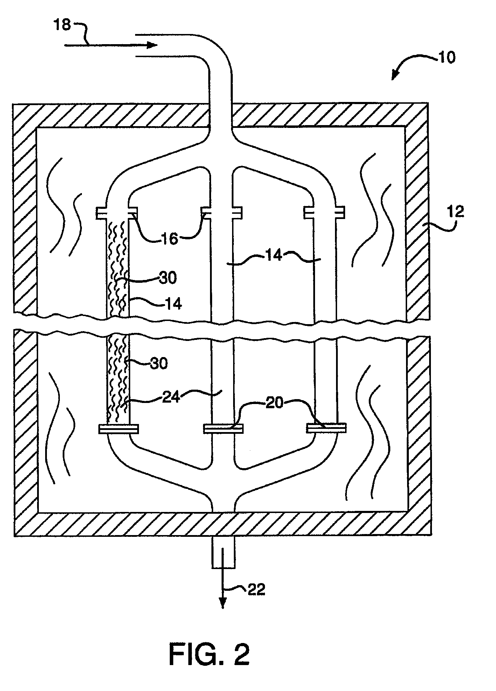

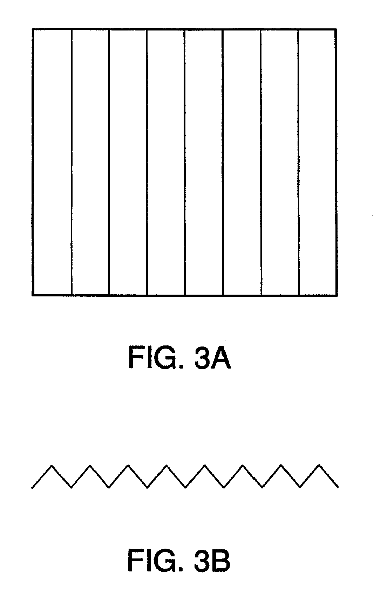

Figure 2 provides an example of a reactor 10 to illustrate producing a product gas comprising hydrogen according to the methane steam reforming reaction. Reactor 10 comprises a furnace 12 in which a plurality of tubes 14 are positioned. The furnace can be heated electrically or by firing a suitable hydrocarbon fuel not shown in the figure. For the economical production of hydrogen on an industrial scale there may be 2 to 500 or more tubes depending upon the size of the hydrogen plant. Each tube may be about 1 to 6 inches in diameter and be about 20 to about 60 feet in length. Each tube 14 comprises a reactor vessel having an inlet 16 that receives a feed gas mixture 18 comprising a gaseous hydrocarbon and steam. Each tube also has an outlet 20 for discharge of the hydrogen containing product gas 22 that is a result of the reactions between the hydrocarbons and the steam within the tubes. The interior 24 of each tube 14 comprises a chamber in which the reactions occur which transform the feed gas mixture into the product gas. As these reactions are endothermic, the furnace 12 transfers heat to the tubes to sustain the reaction. The interior 24 of each tube is "packed" with catalysts 30 according to the present invention. Figures 3A and 3B illustrate a single catalyst 30 of a preferred embodiment in the form of a corrugated foil.

As illustrated in Figure 2, the feed gas 18, comprising a mixture of gaseous hydrocarbon and steam, enters the reactor 10 where it flows into the inlets 16 of tubes 14 and first encounters the catalyst 30. Through reactions promoted by the catalyst, heavy hydrocarbons and methane are converted into lighter hydrocarbons, hydrogen, carbon monoxide, and carbon dioxide.

The resultant gas mixture continues through the "packed" tubes and reacts while heat is supplied within the furnace 12 to sustain the reactions that further convert the resultant gas mixture into the product gas 22 comprising hydrogen, which exits the tubes at the outlets 20.

The employment of a catalyst comprising a metal substrate, at least one layer of a catalyst support material coated onto the metal substrate, wherein the catalyst support material comprises θ-alumina, zirconia, and at least one rare earth metal oxide, and at least one catalytically active component, results in an increase in efficiency for the process according to the invention by virtue of the structural integrity and phase stability observed for such catalysts over time under hydrocarbon steam reforming conditions.

The product gas 22 may be passed to a pressure swing adsorber (PSA) system to form a purfied hydrogen product and an offgas. PSA systems for use in hydrogen production are well-known in the art. A PSA system and cycle may be selected from any known PSA system and cycle. The PSA offgas may be used as fuel in the reformer.

Additional objects, advantages, and novel features of this invention will become apparent to those skilled in the art upon examination of the following examples thereof, which are not intended to be limiting.

### EXAMPLES

### Preparation of zirconia suspensions (colloidal zirconia)

Two different zirconia suspensions were used in preparing aqueous slurries for coating metallic strip substrates.

One of the zirconia suspensions was purchased from Alfa Aesar, Ward Hill, MA (catalog number 40124). It contained 20 weight % ZrO₂, and was optically clear. It is referred to herein as "AA zirconia suspension."

The other suspension was prepared by the following procedure:
1. Dilute 40g ZrO(NO₃)₂ solution (containing 20 wt% Zr as ZrO₂) to 800 ml with warm water.
2. Slowly add (3% NH₄OH) to the zirconium nitrate solution while stirring it until the pH of the solution reaches 4.85 and zirconium oxide precipitates.
3. Filter the precipitated zirconia using a Buchner Funnel.
4. Add concentrated nitric acid to the precipitated zirconia wet cake, to form a cloudy liquid.
5. After about 8 to about 12 hours the cloudy liquid becomes optically clear.

The suspension contained approximately 5% solids by weight. The zirconia suspension prepared according to this procedure is referred to herein as "IH zirconia suspension."

### Preparation of aqueous slurries comprising catalyst support materials

Aqueous slurries were prepared in a ball mill with zirconia balls as the grinding medium. Slurries were prepared in several steps, each step comprising adding one or more components to the ball mill, and milling for a period of time to comminute and mix the new components into the previously added components. In the detailed examples below, the actual amounts and milling durations are specified as a sequence of steps.

### Preparation of coated metal foil samples

Various catalytic layers were prepared on 1 inch wide by 12 inch long metallic strips of FeCrAlloy (0.002 inch or 0.004 inch foil thickness). The metallic strip was cleaned by treating at 650°C for 1 hour in air. The temperature and time used during the cleaning step were not high and long enough to provide a thick layer of aluminum oxide on the surface. Aqueous slurries of catalyst support materials were prepared as specified in the individual examples below. They were applied to the metallic strips by spraying, in several coating steps. Between each coating step, the strips were dried and briefly calcined at 650°C. After the final coating step, the strip was calcined for 1 hour at 900°C or 1000°C. In the examples below, a coating of 30 ± 3 mg per square inch was applied to each of the sides of the metallic foil. Rhodium metal catalyst was applied to the coated catalytic support layer by impregnation from an aqueous solution of rhodium nitrate. Likewise, nickel metal catalyst was applied to the coated catalytic support layer by impregnation from an aqueous solution of nickel nitrate. Several impregnation steps, with intermittent brief calcinations at 650°C, were used to provide the desired amount of metal catalyst loading onto the sample. The samples deposited with the desired amount of metal catalyst were then calcined for the last time 650°C for one hour to produce the final sample of coated catalytic layer on the metallic strip.

### Determining the adhesion of a catalytic layer

The adhesion of a catalytic layer to the metallic strip was evaluated as follows. First, a scissors was used to cut a 12 mm wide by 20 mm long sample from the coated metallic strip. In samples exhibiting fair to good adhesion, flaking of coated material from the metallic strip during cutting was insignificant. The sample was weighed. The amount of coated catalytic layer of the sample was determined by calculating the weight of an uncoated metallic sample having the same size, and subtracting this from the weight of the coated sample. The sample was then sharply folded lengthwise twice, along the two longitudinal lines that divide the sample into 3 sections of 4 mm wide by 20 mm long, to create a profile having an equilateral triangle cross-section and a length of 20 mm. The folded sample was gently tapped to remove loose material, and weighed again. The amount of coated layer flaked off during bending and shaping was calculated from the weight loss. The weight loss as a percentage of the original amount of coated layer prior to bending was then calculated. The adhesion of coated layers on metallic strip was considered to be good if the weight loss was less than 5%. The adhesion was considered to be poor if the weight loss was more than 5%.

### Determining the phase stability of a catalytic layer

The phase stability of a catalytic layer was determined by exposing the catalytic layer to steam-methane reforming conditions. A metal foil sample deposited with the desired metal catalyst was cut from a larger sample prepared according to the procedure above, and placed in a tube having an internal diameter of 6mm or 10mm. Inert alumina beads were placed above and below the sample, and a thermocouple was placed in the tube close to the sample. The tube loaded with sample was placed in an electrically heated furnace. The furnace was heated to 650°C while a mixture of 50% hydrogen and 50% nitrogen flowed through the tube for 2 hours at a pressure of 400 psig, to activate the catalytic layer. The furnace was further heated to 900°C, while a mixture of 75% steam, 24% methane, and 1% hydrogen flowed through the tube, at a pressure of 400 psig to reform methane with steam and produce hydrogen. This condition was maintained for a minimum of 92 hours. Thereafter, the furnace was allowed to cool under a continuous flow of inert nitrogen gas. The sample was removed from the tube and inspected visually for deterioration in the mechanical properties of the coated catalytic layer. The sample was then analyzed by X-ray diffraction to identify crystalline phases in the coated layer. The phase stability of the catalytic layer was determined by the extent to which γ-or θ-alumina transformed to α-alumina. The presence of a significant α-alumina phase in a catalytic layer after subjecting it to steam-methane reforming reaction at 900°C was indicative of insufficient phase stability.

### Determining the catalytic activity of a catalytic layer

During the procedure above to measure the phase stability of a catalytic layer, the composition and flow rate of the product gas (after removal of steam by condensation) was measured while operating at a furnace temperature of 900°C and a pressure of 400 psig. The catalytic activity can be evaluated from the fractional conversion of methane, which is calculated from the product flowrate multiplied by the mole fraction of methane measured in the product gas, divided by the flow rate of methane delivered to the reactor.

### Control Example 1 - Preparation and testing of catalytic layer using lanthanum stabilized gamma alumina slurry

A commercially available lanthanum stabilized γ-alumina washcoat from Catacel Corp. (Garrettsville, OH), part number S02 was used as a source of typical gamma alumina in slurry form. This stabilized γ-alumina washcoat comprises hydrated alumina. 186 grams of this slurry was obtained. It measured 35.1 wt% solids. 30.5 g of this alumina slurry was charged to a ball mill; 0.588 g cellulose (Whatman Corporation of Massachusetts, USA) was added to the ball mill, followed by 30 minutes of milling; 80 g of IH colloidal zirconia suspension (5% solids concentration) was added to the ball mill, followed by 15 minutes of milling.

A catalytically active layer was prepared by coating this slurry onto a FeCrAlloy strip of 0.002 inch thickness, with a final calcination temperature of 1000°C for 1-2 hours, followed by rhodium impregnation. The resulting catalytic layer contained 1.6% Rh.

The adhesion of the catalytic layer was evaluated using the procedure described earlier. The weight loss of the coated layer was 0.8%, confirming good adhesion of the coated catalytic layer on the metallic strip.

The phase stability of the catalytic layer was evaluated at steam-methane reforming conditions, using a coated foil sample of 16 mm by 89 mm. The temperature stage at 900°C was maintained for 135 hours. X-ray diffraction analysis of the sample after steam-methane reforming reaction showed the presence of a significant amount of α-alumina in the coated catalytic layer.

This example shows that coated catalytic layers produced using lanthanum stabilized γ-alumina and zirconia are not sufficiently phase stable in steam-methane reforming environment. They are therefore not suitable for producing coated catalytic layers for high temperature, high steam environment. Stabilization of γ-alumina with lanthanum is insufficient to prevent phase transformation of γ-alumina to α-alumina under conditions of high temperature and high steam partial pressure.

The catalytic activity of the catalytic layer was evaluated using the procedure described above. The fractional methane conversion was 60%.

### Example 2 - Preparation and testing of catalytic layer using lanthanum stabilized theta alumina slurry

An aqueous slurry comprising catalyst support materials was prepared using the same procedure as described in Comparative Example 1, wherein the charge of the 30.5g of alumina washcoat was replaced by a 30.5g charge of a commercially available lanthanum stabilized θ-alumina (theta) slurry which also comprised boehmite (Catacel Corp., Garrettsville, OH; washcoat part #550).

A catalytically active layer was prepared by coating the resulting final slurry onto a FeCrAlloy strip of 0.002" thickness, with a final calcination temperature of 1000°C, followed by rhodium impregnation. The resulting catalytic layer contained 1.7% Rh.

The adhesion of coated catalytic layer was evaluated by using the procedure described earlier. The weight loss of the coated layer was 2.2%, confirming good adhesion of the coated catalytic layer on the metallic strip.

The phase stability of coated catalytic layers was evaluated in a steam-methane reforming reaction using the procedure described earlier, using a coated foil sample of 5.5 mm by 90 mm. The temperature stage at 900°C was maintained for 92 hours. X-ray diffraction analysis of the sample after steam-methane reforming reaction showed the presence of only a trace amount of α-alumina in the coated catalytic layer, indicating that there was insignificant phase transformation of θ-alumina to α-alumina during steam-methane reforming reaction.

The catalytic activity of the catalytic layer was evaluated using the procedure described above. The fractional methane conversion was 45.3%.

### Example 3 - Preparing and testing catalytic layers using lanthanum stabilized theta alumina (no boehmite; IH zirconia)

The procedure for preparing a catalytic layer on FeCrAlloy foil described in Example 2 was repeated, with a third commercial washcoat, Catacel Corp. part # 221. This washcoat is very similar to that in Example 2, the exception being that this washcoat contains no boehmite binder component.

A catalytically active layer was prepared by coating this slurry onto a FeCrAlloy strip (final calcination temperature 1000°C), followed by rhodium impregnation. The resulting catalytic layer contained 1.3% Rh.

The adhesion of coated catalytic layer was evaluated by using the procedure described earlier. The weight loss of the coated layer was 3%, confirming good adhesion of the coated catalytic layer on the metallic strip.

The phase stability of coated catalytic layers was evaluated in a steam-methane reforming reaction using the procedure described earlier, using a coated foil sample of 12 mm by 41 mm. The temperature stage at 900°C was maintained for 100 hours. X-ray diffraction analysis of the sample after steam-methane reforming reaction showed the presence of only a trace amount of α-alumina in the coated catalytic layer, indicating that there was insignificant phase transformation of θ-alumina to α-alumina during steam-methane reforming reaction.

The catalytic activity of the catalytic layer was evaluated using the procedure described above. The fractional methane conversion was 39.2%.

### Example 4 - Preparing and testing catalytic layers using lanthanum stabilized θ-alumina (no boehmite; AA zirconia)

The procedure for preparing a catalytic coated layer described in Example 3 was repeated with the exception of replacing IH zirconia suspension with AA zirconia suspension.

The phase stability of coated catalytic layers was evaluated in a steam-methane reforming reaction using the procedure described earlier, using a coated foil sample of 12 mm by 41 mm. The temperature stage at 900°C was maintained for 127 hours. X-ray analysis of the sample after steam-methane reforming reaction showed the presence of only a trace amount of α-alumina in the coated catalytic layer, indicating that there was insignificant phase transformation of θ-alumina to α-alumina during steam-methane reforming reaction.

The catalytic activity of the catalytic layer was evaluated using the procedure described above. The fractional methane conversion was 38.9%.

### Example 5 - Preparing and testing catalytic layers using lanthanum stabilized θ-alumina (no boehmite; Nickel catalyst)

The procedure for preparing a catalytic coated layer described in Example 3 was repeated with the exception of replacing the impregnation with rhodium nitrate solution with an impregnation with nickel nitrate solution. The nickel concentration in the washcoat was 14% by weight.

The catalytic activity of the catalytic layer was evaluated using the procedure described above, using a coated foil sample of 5.5 mm by 90 mm. The fractional methane conversion was 25.3%.

### Example 6 - Preparing and testing catalytic layers using lanthanum stabilized θ-alumina (no boehmite; Nickel/Rhodium catalyst)

The procedure for preparing a catalytic coated layer described in Example 3 was repeated with the exception of replacing the impregnation with rhodium nitrate solution with an impregnation with a solution containing both nickel nitrate and rhodium nitrate. The nickel concentration in the washcoat was 13.7% by weight, the rhodium concentration was 1.2% by weight.

The catalytic activity of the catalytic layer was evaluated using the procedure described above, using a coated foil sample of 12 mm by 26 mm. The fractional methane conversion was 33.9%.

The foregoing examples illustrate that the method of the invention can be applied to produce strongly adherent catalytically active layers on a metallic surface, that exhibit a greatly reduced tendency to phase-convert to α-alumina when compared to preparations that do not follow the method of the invention (Comparative Example 1). Catalysts and catalytic structures produced according to the method of the invention possess significant improvements in adhesion and phase stability over those described in the prior art, and are suitable for application in a high temperature, high steam environment.

The foregoing examples and description of the preferred embodiments should be taken as illustrating, rather than as limiting the present invention as defined by the claims. As will be readily appreciated, numerous variations and combinations of the features set forth above can be utilized without departing from the present invention as set forth in the claims. Such variations are not regarded as a departure from the spirit and scope of the invention, and all such variations are intended to be included within the scope of the following claims.

## Claims

1. A process for producing a gaseous product comprising hydrogen, said process comprising:
contacting a feed gas mixture comprising steam and a hydrocarbon gas comprising from 1 to 5 carbon atoms with a catalyst structure under reaction conditions sufficient to produce the product gas comprising hydrogen, wherein the catalyst structure comprises:
a metal substrate comprising a metal;
at least one layer of a catalyst support material coated onto the metal substrate, wherein the catalyst support material comprises: a thermally stabilized alumina comprising greater than about 50% θ-alumina; zirconia; and at least one rare earth metal oxide; and
at least one catalytically active component, wherein the at least one catalytically active component is incorporated either into or onto the catalyst support material.

2. The process of Claim 1 wherein the reaction conditions comprise a temperature in the range of from about 500°C to about 900°C and a pressure of from about 1 atmosphere to about 50 atmospheres.

3. The process of Claim 1 wherein the metal is selected from the group consisting of: stainless steel, a nickel-containing alloy, an aluminum-containing alloy, a steel composition comprising iron, aluminum, and chromium, and mixtures thereof.

4. The process of Claim 1 wherein the metal is a steel composition comprising iron, aluminum, and chromium.

5. The process of Claim 1 wherein the metal substrate is selected from the group consisting of: a foil, a sheet, a plate, a shaped form having a plurality of machined or etched microchannels, a duct, a tube, and mixtures thereof.

6. The process of Claim 5 wherein the foil is corrugated.

7. The process of Claim 1 wherein the catalyst support material further comprises boehmite.

8. The process of Claim 1 wherein the catalytically active component is selected from the group consisting of: nickel, rhodium, platinum, ruthenium, palladium, any of their oxides, and mixtures thereof.

9. The process of Claim 1 wherein the hydrocarbon gas comprising from 1 to 5 carbon atoms is selected from the group consisting of: methane, ethane, propane, butane, pentane, and combinations thereof.

10. The process of Claim 9 wherein the hydrocarbon gas comprising from 1 to 5 carbon atoms is methane.

11. The process of Claim 1 wherein the catalyst structure is prepared by a process comprising the steps of:
preparing a first aqueous slurry comprising water; a thermally stabilized alumina comprising θ-alumina; at least one catalytically active component; and zirconia, wherein the zirconia and the thermally stabilized alumina comprising θ-alumina are present in the slurry at a molar ratio of from 0.05 to 5.0 zirconia to alumina;
contacting a metal substrate with the first aqueous slurry to form a coated metal substrate; and
calcining the coated metal substrate at a temperature of from 500°C to 1100°C to form the catalyst structure.

12. The process of Claim 11 wherein the process for preparing the catalyst structure further comprising the steps of:
contacting the catalyst structure with a second aqueous slurry to add at least one additional layer of the second aqueous slurry onto the catalyst, wherein the second aqueous slurry comprises water; a thermally stabilized alumina comprising θ-alumina; at least one catalytically active component; and zirconia, wherein the zirconia and the thermally stabilized alumina comprising θ-alumina are present in the slurry at a molar ratio of from 0.05 to 5.0 zirconia to alumina; and
calcining the catalyst structure comprising the at least one additional layer of the aqueous slurry at a temperature of from 500°C to 1100°C.

13. The process of Claim 11 wherein the zirconia has a particle size of from about 0.005 to about 0.01 microns.

14. The process of Claim 1 wherein the catalyst structure is prepared by a process comprising the steps of:
preparing a first aqueous slurry comprising water; an acid; a thermally stabilized alumina comprising θ-alumina; and zirconia, wherein the zirconia and the thermally stabilized alumina comprising θ-alumina are present in the slurry at a molar ratio of from 0.05 to 5.0 zirconia to alumina;
forming a layer of a catalyst support material on a metal substrate by contacting the metal substrate with the first aqueous slurry and calcining the coated metal substrate at a temperature of from 500°C to 1100°C to form a calcined coated metal substrate;
contacting the calcined coated metal substrate with a solution comprising the at least one catalytically active component to incorporate the at least one catalytically active component either into or onto the catalyst support material to form a catalyst precursor; and
calcining the catalyst precursor at a temperature of from 300°C to 1100°C to form the catalyst structure.

15. The process of Claim 1 wherein the thermally stabilized alumina comprises greater than about 75% θ-alumina.
